# EUROPEAN PATENT SPECIFICATION

(11) **EP 2 264 639 B1**
(45) Date of publication and mention of the grant of the patent: **17.04.2019**
(21) Application number: 10165196.6
(22) Date of filing: 08.06.2010
(51) Int. Cl.: G06F 21/12

(54) **Securing executable code integrity using auto-derivative key**
Sicherung der Integrität ausführbaren Codes mithilfe eines selbstabgeleiteten Schlüssels
Sécurisation de l'intégrité de code exécutable utilisant une clé dérivative automatiquement

(30) Priority: 19.06.2009 US 218597 P
(43) Date of publication of application: 22.12.2010
(73) Proprietor: Uniloc Luxembourg, S.A., 2540 Luxembourg (LU)
(72) Inventor: Etchegoyen, Craig Stephen, Irvine CA 92612 (US); Mordetsky, Joseph Martin, Irvine CA 92606 (US)
(74) Representative: Dearling, Bruce Clive

(56) References cited:
- EP-A1- 2 037 389
- WO-A1-2008/034900
- US-A1- 2008 263 366

## Description

### BACKGROUND

### Field

The present disclosure relates to methods and systems for protecting computer software from unauthorized tampering or use.

### Description of Related Art

Built-in controls are often placed on use of distributed software to prevent non-compliance with software license restrictions and preserve a healthy and viable market for desired software. Often, these controls involve adding built-in software protection functions to distributed software that is to be protected, for the purpose of controlling or limiting use of the distributed software. For example, a common form of control limits the number of times a distributed software object can be installed on a computer system. Other examples of control functions include requiring each installed instance of the software to be registered with a central registry, or requiring entry of a key imprinted on sales packaging or transmitted to the licensee at the time of purchase to enable installation on a client system. These and other software protection functions may be coded, compiled, and released as part of the licensed software program.

Such software protection features are useful, but subject to being modified or disabled. For example, a motivated hacker might tamper with the binary code that constitutes the software release by trial and error, until creating a tampered version that performs like the original release, but with the software protection features of the original release partially or entirely disabled. The hacker can then distribute the tampered version free of the intended software protection features.

US 2008/263366 describes encrypting code blocks of a program to prevent reverse engineering and to protect piracy of software. A program is modified to include additional protective code, including a protective code launcher which is launched with the program. Decryption and execution code is also provided for the protective code or more code blocks of the program. A given code block is encrypted using a key which is based on a previous code block, and the previous code block is encrypted using a key which is based on a further previous code block, and so forth. If a hacker modifies the program, such as to avoid a message which requires the user to purchase the program, the program will be disabled. The program can also be encrypted based on computer hardware such as a hard disk serial number so that it will only operate on a particular computer.

EP 2037389 describes an electronic file protection system that includes at least one first memory device removably disposable in communicative relation with one or more computers, wherein the first memory device includes a unique identifier. The system further includes unique, non-reproducible encryption key data disposed or otherwise saved on the first memory device. The encryption key data is structured to be utilized in conjunction with at least one encryption algorithm so as to at least partially protect the electronic file, or otherwise orient the electronic file in an encrypted mode. Further, the unique identifier is reproducible and disposable in associated relation with a replacement memory device.

WO 2008/034900 describes a method for protecting a computer program against manipulation and for shielding its communication with other programs against eavesdropping and modification. The method comprises the creation of individualized program copies to different groups of users, the insertion of or the derivation of individual cryptographic keys from the program code, the obfuscation of the program code, and the self-authentication of the program towards other programs.

It would be desirable, therefore, to provide systems and methods for securing the integrity of executable software to prevent use of tampered software and discourage intentional tampering of software security features.

### SUMMARY

According to a first aspect of the present invention there is provided a method secure execution of an executable software object stored in a computer memory at a client device, the method in accordance with claim 1.

The present technology uses a cryptographic hash, digital fingerprint, or simple hash operating on a portion of a compiled software executable to generate a cryptographic key. The compiled software executable comprises a discrete software object made up of one or more binary files, and includes code for performing executable software protection features. The portion of the compiled software executable may be selected to include at least a substantial portion of the executable software protection features coded in binary form, and should exclude any variable portions of the software, for example, data tables holding variable values. The cryptographic key may be a key useful for both encryption and decryption, or a private key for a public/private key pair.

The cryptographic key may be generated before distribution of the software object using a defined one-way hashing algorithm implemented on a computer. Code for applying the one-way hashing algorithm to input data to produce a cryptographic key, and code for decrypting a data object using a supplied key of the form generated by the hashing algorithm, may be compiled and included as part of the executable software protection for the software object to be distributed. In the alternative, such code may be maintained separately from the distributed software object. The hashing and decryption/encryption algorithms themselves may be selected from any suitable hashing or decryption/encryption algorithm as known in the art of cryptography.

Before distribution of the software object, code for performing any desired function of the software, may be selected for control. A function for control, for example, may be one that is essential to the software's principal purpose, or that is necessary for overall functioning of the software. Several such functions may be identified for control. Once the functions to be controlled are selected, the software object to be distributed is compiled, and a portion or portions of the compiled software necessary for execution of the selected functions are identified. These identified portions of the executable should exclude every portion of the compiled software executable used to generate the cryptographic key. The identified portions of the binary code are then encrypted using the cryptographic key prior to distribution to perform a protected software object for distribution. After encryption, the protected software object includes an unencrypted portion including at least the executable software protection features, and an encrypted portion including the identified portions of the software object necessary for execution of the functions selected for control.

The protected software object may then be distributed and installed on a suitable client. The software should be installed on the client with its encrypted and unencrypted portions intact. The portions encrypted using the cryptographic key should not be decrypted during installation, and should be stored on the client in encrypted form. These code portions are to be decrypted at the client at run time. If the client is unable to decrypt these portions, the controlled software functions will not be operational and the software object will be disabled, at least with respect to the controlled functions.

To decrypt the encrypted software portions and enable full operation of the executable at run time, the client extracts the cryptographic key from the unencrypted portion of the software object making up the software control functions. If this portion of the software has been tampered with, the client will be unable to extract the cryptographic key and will therefore be unable to decrypt the encrypted software portion to operate the software at run time. Conversely, if the software control functions have not been tampered with, these functions will continue to operate according to their intended purpose and the cryptographic key will be intact. The client will therefore be able to decrypt the encrypted software portions to access all software functions. In either case, the client should be able to recognize and decrypt the encrypted portions at run time. For example, the software may be supplied with code that extracts the decryption key from a stored executable file, recognizes one or more files or portions of files that require decryption, decrypts this data using the key, and causes the decrypted executable data to be loaded into processor memory in the correct sequence for execution by the client processor.

The cryptographic key may be hidden in the unencrypted code portion so that it is practically undiscoverable. During the decryption process, the key may be retained only in temporary processor memory and beyond ready discovery by a casual hacker. Even if a skilled hacker is able to discover the key, it cannot readily be used to enable the protected software functions at runtime. Such enablement requires the operation of the decryption code built into the software protection functions. Selectively disabling the software protection functions without disrupting the run-time decryption function would involve fairly arduous reverse engineering and programming tasks, effectively destroying, or at least greatly diminishing, the economic incentives for disabling selected parts of the software protection functions. Thus, the software may be distributed with a greater assurance that its software protection functions will not be disabled. This result may be accomplished without requiring additional hardware for software protection, without disrupting the self-contained nature of the distributed software object, and with minimal computational overhead on the client device.

A more complete understanding of the system and method for securing the integrity of executable code using an auto-derived key will be afforded to those skilled in the art, as well as a realization of additional advantages and objects thereof, by a consideration of the following detailed description. Reference will be made to the appended sheets of drawings which will first be described briefly.

### BRIEF DESCRIPTION OF THE DRAWINGS

FIG. 1 is a schematic diagram showing elements of a system for securing the integrity of executable code using an auto-derived key.
FIG. 2 is block diagram showing elements of a system for executing executable code protected by an auto-derived key.
FIG. 3 is a flow chart showing an example of a method for securing the integrity of executable code using an auto-derived key.
FIG. 4 is a flow chart showing an example of a method for executing executable code protected by an auto-derived key.

Throughout the several figures and in the specification that follows, like element numerals are used to indicate like elements appearing in one or more of the figures.

### DETAILED DESCRIPTION

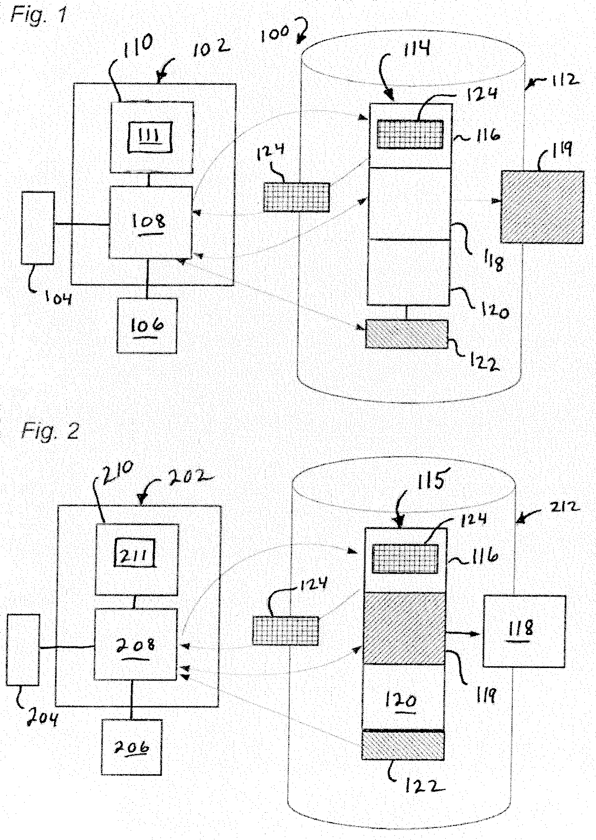

The present technology provides for securing the integrity of executable code using an auto-derived key. FIG. 1 shows a server-side system 100 which may be used to configure executable software for distribution. System 100 may comprise a computer 102, also referred to herein as a "server." Computer 102 comprises a processor 108 connected to a memory 110 holding instructions 111 configured to cause actions as described herein. Processor 108 may be operably associated with a file storage device 112 on which is stored a software executable object 114, comprising one or more files. The processor 108 and memory 110 with these instructions comprise means for performing the described actions. The instructions 111 may be stored in a computer memory or computer-readable medium and loaded into memory 110 prior to processing the input executable object 114.

The software object 114 may comprise a code compiled from source code and configured to perform various functions when executed by a computer. A first portion 116 is compiled from source code for performing software protection functions. Software protection functions are performed by input/output activities that are designed to protect the software 114 from unauthorized use. A simple example of such activities is requiring entry of a serial number or authorization code to enable installation or operation of the software object, using a hardware fingerprint to identify client-side installations, or limiting the number of copies of the software object that can be made. These and other such activities use computing resources to serve the purpose of preventing or discouraging use of the software object that is not in compliance with terms of use specified in a license or other agreement. The first portion 116 comprises compiled code for software protection functions, but not necessarily all software protection functions included in software 114.

Software 114 may further comprise second portion 118 distinct from the protection function portion 116. Second portion 118 may include code for performing any functions. Functions performed by second portion 118 should include some or all functions likely to be considered most desirable or valuable by end users of the code 114. For example, if object 114 is a computer game, such features may include unlocking of game objects, setting player customization parameters, accessing the game environment, or unlocking levels of play. These examples are not intended to limit the scope of functions that may be included in portion 118. In some embodiments, portion 118 may be selected to comprise a relatively small but critical part of functions performed by software 114. In other embodiments, portion 118 may comprise most or all functions in software 114 except those included in the first portion 116.

Software 114 may further comprise a third portion 120 distinct from the first portion 116 and second portion 118. The third portion 120, if present, may comprise code for performing functions that are considered less desirable or valuable that the functions encoded by portion 118, or otherwise selected for receiving a lower level of protection.

Processor 108, under control of instructions stored in memory 110, processes the first code portion 116 to read and extract a definite part 124 of the code portion 116. The part 124 may be selected from the code portion using any defined and reproducible algorithm, for example, extracting every N^{th} bit between specified bit positions to obtain a data signature of definite size. To "extract" here means to read and copy data to generate a definite data object (e.g., part 124) in a computer memory, and does not require removing or altering any data in code portion 116. Software object 114 should be unaltered by the extraction of part 124. Part 124 may comprise the entirety of code portion 116, or some smaller part. It may be extracted from contiguous, or non-contiguous data comprising the compiled code 114.

Processor 108 and memory 11 may be further programmed to compute a data signature for the extracted part 124, such as using a one-way hash, data signature, cryptographic hash, or similar procedure. Suitable cryptographic and other hash functions, for example, SHA-256/224, are known in the art of cryptography.

After computing the data signature, the processor under control of instructions in memory 110, uses the data signature to encrypt the second data portion 118 to provide an encrypted second data portion 119. The processor may use the data signature as a symmetrical encryption key, useful for both encryption and decryption. In the alternative, the processor may use the data signature as the private part of a public/private key pair. The processor replaces the unencrypted code portion 118 with the encrypted output 119 in software object 114, to generate a new software object 115 (shown in FIG. 2) comprising the portions 116, 119 and 120, and excluding the unencrypted portion 118.

Software object 114 and/or the new software object 115 may also include a code portion 122 comprising instructions and/or data for use in encrypting and/or decrypting portion 118/119. For example, code portion 122 may comprise: data that defines the various portions 116, 118 (or 119), and 120; data defining the location and extent of the data 124 extracted for generating a cryptographic key; an algorithm defining computational steps for computing the cryptographic key from the extracted data 124; an algorithm defining computational steps for encrypting the code portion 118; an algorithm defining computational steps for decrypting the code portion 119; and/or information for assembling or coordinating execution of decrypted data with portions 116, 120 to provide executable program instructions. In some embodiments, code portion 122 may be packaged with software object 114 and processed by processor 108 to generate the software 115. In the alternative, or in addition, the parameters defined by the code portion 122 may be determined by processor 108 as part of its programmed data processing, and appended to the original code package 114 after processing. Like other portions of software 114 and 115, code portion 122 may be compiled as executable binary data. Like other parts of code package 114 and 115, it may be obfuscated and/or encrypted to prevent and discourage decompiling or other unauthorized use.

After the second portion 118 is encrypted to become encrypted portion 119, the code package 115 may be distributed in any suitable way for installation and use on a client computing device. For example, FIG. 2 shows elements of a client computer 202 comprising a processor 208 connected to a memory 210 holding instructions 211 configured to cause actions as described herein. Processor 208 may be operably associated with a file storage device 212 on which is stored a software executable object 115, comprising one or more files. The processor 208 and memory 210 with these instructions 211 comprise means for performing the described actions. The instructions 211 may comprise part of the protected code 115, for example code portion 122, and may be stored in a computer memory or computer-readable medium and loaded into memory 210 during or prior to processing the software object 115.

Executable object 115 may comprise the elements discussed above for executable software 114, except that encrypted code portion 119 replaces the unencrypted binary code 118 processed by server 102 and the auto-key functions 122 may be added. Client 202 may be in use by a person providing control input through an interface device 204 to achieve a desired output from output device 206, via interaction with processor 208 operating software 119. To successfully operate software 119, the processor must at some time or times decrypt the encrypted portion 119. To avoid creating decrypted stored executable files, the processor 208 may, according to a predetermined scheme, decrypt the encrypted portion only at a specified time or times during operation of executable 115, and maintain the unencrypted data 118 exclusively in a buffer or other temporary memory until the program 115 is terminated, at which time the processor 208 may delete the unencrypted code 118 or allow it to be lost as memory space is overwritten with other data or powered down.

To decrypt the encrypted portion 118, client 202 may access decryption instructions 122. Using the instructions and/or data encoded in code portion 122, the processor may locate and read the key data 124 located in code portion 116. If code portion 116 encoding software protection functions has been altered in any meaningful way, the key data 124 will not be intact and client 202 will be unable to decrypt code portion 119. If code portion 116 is unaltered, key data 124 will be intact. In either case, processor 208 may process the key data 124 using the designated cryptographic hash, which is designated by code portion 122 or by some other means, such as with a separately distributed protection scheme. By applying the designated hash to key data 124, the processor will obtain the necessary cryptographic key for decrypting the encrypted code portion 118. If the key data 124 is not perfectly intact, the processor will not obtain a useful key.

The processor 208 may decrypt code portion 119 to obtain unencrypted code 118, which the processor may maintain in a temporary storage buffer and execute as required to perform the actions coded by portion 118. Decryption instruction 122 or other code portion may enable coordination of the buffered decrypted code portion 118 and the remainder of executable 115. If the decrypted data is not functional, this indicates that the decryption key is not valid and that, thus, the software protection functions have been altered. Conversely, if the functions coded by portion 118 execute normally, this means that the software protection portion 116 is not altered, and has or will be executed by processor 208.

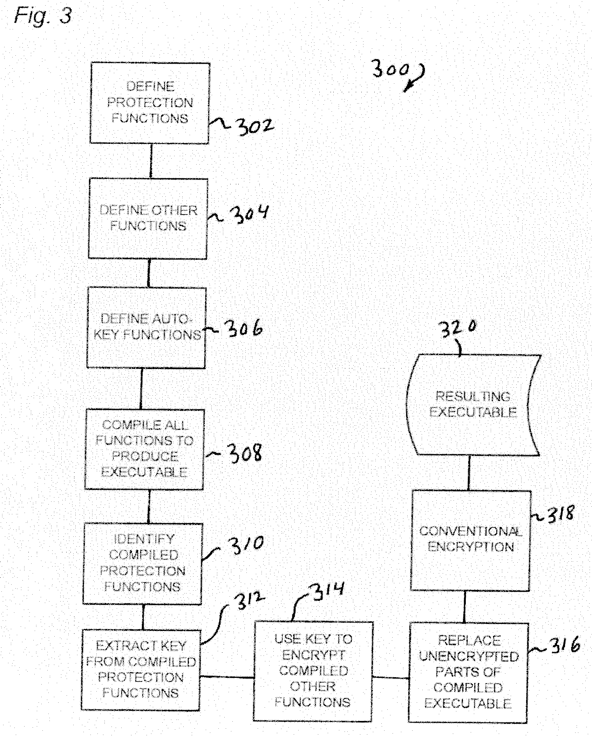

In accordance with the foregoing, FIG. 3 shows an exemplary method 300 and steps for performance by a server to protect a designated software executable using an auto-key scheme. Method 300 may be applied to a wide range of different types of executable data and files to provide a more secure product for public distribution. Once the server has received a completed executable 302, the code portion making up the designated software protection functions should be defined. These are the functions that are to be protected from alteration, and that are not part of the core product functions as are normally used at the client nodes. If source code is supplied to the server, the software protection portion may be defined by reading and classifying the source code. If only compiled code is provided, it should be provided with data addresses that define and delimit the extent of the software protection functions.

At 304, the server may similarly define other functions that are not included in the software protection functions. At 306, the server may define the "auto-key" functions, meaning those functions that define the protection scheme, e.g., as defined by code portion 122 discussed above. As noted above, auto-key functions may, in the alternative, be added by the server to the resulting protected executable 320 according to a protection scheme defined at the server. Together, steps 302, 304, and 306 describe a process of generating or receiving source code, and classifying the functions defined by the received source code into mutually exclusive categories. A category of unprotected code may also exist.

At 308, the server may compile the source code 308 to produce one or more executable files. The server may then be used to identify in the compiled code 310 the limits of the compiled protection functions and other functions through the use of data mapping and/or markers. At 312, the server extracts key data from the compiled protection function according to its identified limits and generates a cryptographic signature of the extracted data. At 314, the server uses the cryptographic signature to encrypt the other designated portion of the executable data that is designated for encryption. The server may discard (not preserve in any memory) the key used for encryption. However, the server may write the auto-key functions, including the limits of the key data and the cryptographic signature algorithm used to compute the data signature, or an identifier of the algorithm, to data associated with or incorporated in the executable program.

At 316, the server removes the unencrypted part of the executable program that is designated for protection, and adds the data encrypted at step 314. The server may also include executable modules incorporating the auto-key instructions intended for use when operating the protected program. The completed protected program may include the compiled software protection functions, the auto-key functions, an encrypted portion, and optionally, functions that are not included in any of the foregoing, such as auxiliary functions that do not require a high degree of protection.

At 318, the server may apply a conventional encryption process to the assembled executable. This step merely adds a conventional layer of additional protection to the resulting executable 320. The resulting executable 320 may be stored on any suitable computer-readable medium for later distribution to one or more clients.

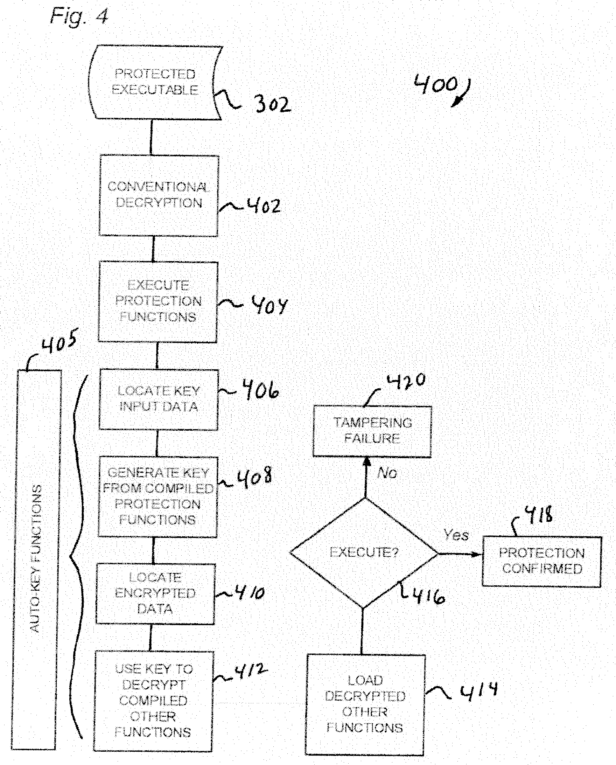

FIG. 4 shows a method 400 that may be performed by a client receiving the protected executable 302. If conventional encryption (e.g., PKI or other scheme) was used to encrypt the executable, the client may decrypt 402 the entire executable prior to further processing. However, decryption step 402 will not result in decryption of the specially encrypted executable portions encrypted at step 314 of FIG. 3.

At 404, the client may execute the protected software protection functions that the present technology is employed to protect. These functions should be performed by the client in response to the conditions specified for them, at initial installation and/or at other times. These may include both existing functions known in the art, and protection functions to be developed in the future. The client may require successful completion of the protection functions before proceeding with method 400. For example, the client may require that the client device is authorized to install and/or operate the protected executable or that the client is in use by a person with authority to use the protected executable, as determined by the protection functions, before proceeding with subsequent steps.

Steps 406, 408, 410, and 412 together provide examples of actions that may be defined by auto-key functions 405. It is necessary that the client be provided with instructions for performing the auto-key functions. These instructions may be provided with or as part of the protected executable 320 as described above. In the alternative, the auto-key functions may be separately transmitted, for example from a server to the client at run time in response to some event triggered by the software protection functions, or by some other method.

At 406, the client locates the key data in the protected executable, using a map or algorithm supplied by the auto-key functions. The client read and loads the key data into processor memory, and generates a decryption key by applying a specified cryptographic signature to the key data. At 410, the client locates encrypted data in the protected executable, using a second map or algorithm supplied by the auto-key functions. Then, at 412, the client decrypts the located encrypted data using the key generated at 408.

If the decryption key is valid and the software executable has not been corrupted, the resulting decrypted data will comprise part of the original executable that performs valuable functions on the client. The client may then load the decrypted compiled data 414 into processor memory and/or a protected memory buffer, for execution whenever called for. If the decrypted functions operate normally when called, then operation of the software protection functions is indirectly confirmed 418. Conversely, if the decrypted functions do not operate normally, then this indicates that the software protection functions have been tampered with or corrupted. Thus, the technology disclosed herein discourages and prevents tampering with software protection features of distributed executable software, without requiring additional any additional hardware.

Having thus described a preferred embodiment of securing the integrity of executable code using an auto-derived key, it should be apparent to those skilled in the art that certain advantages of the within system have been achieved. It should also be appreciated that various modifications, adaptations, and alternative embodiments thereof may be made without departing from the scope and spirit of the present technology. The following claims define the scope of what is claimed.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system.

## Claims

1. A method of secure execution of an executable software object (115) stored in a computer memory (212) at a client device, the method comprising:
executing, using a computer processor (208), a first portion (122) of the executable software object to identify:
(i) a location of data extractable from a second code portion (116) of the executable software object, wherein the second code portion (116) of the executable software object is compiled from software protection functions to protect the executable software object from unauthorized use, and
(ii) an algorithm defining computation steps for computing a cryptographic key from the data extracted from the second code portion;
extracting the data from the second code portion based on said location; computing the cryptographic key from the extracted data using the algorithm, said cryptographic key being useful only if said extracted data from the second code portion is unaltered;
decrypting a third portion (119) of the executable software object using the cryptographic key (124) to provide an executable third portion (118) that is distinct from the first and second portions of the executable software object; and
executing the executable third portion (118) using the computer processor (208) to perform a processing function.

2. The method of claim 1, wherein the function that protects the executable software from unauthorized use determines whether the executable software is installed on an authorized client device before decrypting the third portion of the executable software.

3. The method of claim 1 wherein the function that protects the executable software from unauthorized use determines whether the client device is in use by an authorized user before decrypting the third portion of the executable software.

4. The method of any of claims 1 to 3, wherein the decryption key is extracted from non-contiguous data segments of the executable software by the computer processor.

5. The method of claim 4, wherein the first portion of executable software includes an algorithm for locating the non-contiguous data segments.

## Patentansprüche

1. Verfahren zur sicheren Ausführung eines ausführbaren Softwareobjekts (115), das in einem Computerspeicher (212) in einer Client-Vorrichtung gespeichert ist, wobei das Verfahren die folgenden Schritte umfasst:
- Ausführen eines ersten Bereichs (122) des ausführbaren Softwareobjekts unter Verwendung eines Computerprozessors (208) zum Identifizieren von:
(i) einem Speicherort von Daten, die aus einem zweiten Codebereich (116) des ausführbaren Softwareobjekts extrahierbar sind, wobei der zweite Codebereich (116) des ausführbaren Softwareobjekts aus Softwareschutzfunktionen kompiliert ist, um das ausführbare Softwareobjekt vor unbefugter Verwendung zu schützen, und
(ii) einem Algorithmus, der Berechnungsschritte zum Berechnen eines kryptografischen Schlüssels aus den aus dem zweiten Codebereich extrahierten Daten definiert;
- Extrahieren der Daten aus dem zweiten Codebereich auf der Basis von dem Speicherort;
- Berechnen des kryptographischen Schlüssels aus den extrahierten Daten unter Verwendung des Algorithmus, wobei der kryptographische Schlüssel nur dann verwendbar ist, wenn die extrahierten Daten aus dem zweiten Codebereich unverändert sind;
- Entschlüsseln eines dritten Bereichs (119) des ausführbaren Softwareobjekts unter Verwendung des kryptographischen Schlüssels (124), um einen ausführbaren dritten Bereich (118) zur Verfügung zu stellen, der sich von dem ersten und dem zweiten Bereich des ausführbaren Softwareobjekts unterscheidet; und
- Ausführen des ausführbaren dritten Bereichs (118) unter Verwendung des Computerprozessors (208), um eine Verarbeitungsfunktion auszuführen.

2. Verfahren nach Anspruch 1,
wobei die Funktion, die die ausführbare Software vor unbefugter Nutzung schützt, bestimmt, ob die ausführbare Software auf einer autorisierten Client-Vorrichtung installiert ist, bevor der dritte Bereich der ausführbaren Software entschlüsselt wird.

3. Verfahren nach Anspruch 1,
wobei die Funktion, die die ausführbare Software vor unbefugter Nutzung schützt, bestimmt, ob die Client-Vorrichtung von einem autorisierten Benutzer verwendet wird, bevor der dritte Bereich der ausführbaren Software entschlüsselt wird.

4. Verfahren nach einem der Ansprüche 1 bis 3,
wobei der Entschlüsselungsschlüssel aus nicht zusammenhängenden Datensegmente der ausführbaren Software von dem Computerprozessor extrahiert wird.

5. Verfahren nach Anspruch 4,
wobei der erste Bereich der ausführbaren Software einen Algorithmus zum Lokalisieren der nicht zusammenhängenden Datensegmente beinhaltet.

## Revendications

1. Procédé d'exécution sécurisé d'un objet logiciel exécutable stocké dans une mémoire d'ordinateur (212) au niveau d'un dispositif client, le procédé comprenant :
l'exécution, par le biais d'un processeur d'ordinateur (208), d'une première partie (122) de l'objet logiciel exécutable afin d'identifier :
(i) une localisation de données extractibles d'une deuxième partie de code de l'objet logiciel exécutable, selon lequel la deuxième partie de code de l'objet logiciel exécutable est compilée à partir de fonctions de protection de logiciel afin de protéger l'objet logiciel exécutable d'une utilisation non-autorisée ;
(ii) un algorithme définissant des étape de computation pour la computation d'une clé de chiffrement à partir des données extraites de la deuxième partie de code ;
l'extraction des données de la deuxième partie de code sur la base de ladite localisation ;
la computation de la clé de chiffrement à partir des données extraites par le biais de l'algorithme, ladite clé de chiffrement n'étant utile que si lesdites données extraites de la deuxième partie de code sont inaltérées ;
le déchiffrement d'une troisième partie de code (119) de l'objet logiciel exécutable par le biais de la clé de chiffrement (124) afin de fournir une troisième partie de code exécutable (118) distincte des première et deuxième parties de code de l'objet logiciel exécutable ; et
l'exécution de la troisième partie de code exécutable (118) par le biais du processeur d'ordinateur (208) afin d'effectuer une fonction de traitement.

2. Procédé selon la revendication 1, selon lequel la fonction qui protège le logiciel exécutable de toute utilisation non-autorisée détermine si le logiciel exécutable est installé sur un dispositif client autorisé avant le déchiffrement de la troisième partie de code du logiciel exécutable.

3. Procédé selon la revendication 1, selon lequel la fonction qui protège le logiciel exécutable de toute utilisation non-autorisée détermine si le logiciel exécutable est en cours d'utilisation par un utilisateur autorisé avant le déchiffrement de la troisième partie de code du logiciel exécutable.

4. Procédé selon l'une quelconque des revendications 1 à 3, selon lequel la clé de déchiffrement est extraite à partir de segments de données non-contigus du logiciel exécutable par le biais du processeur d'ordinateur.

5. Procédé selon la revendication 4, selon lequel la première partie de code du logiciel exécutable comporte un algorithme de localisation des segments non-contigus.
